# EUROPÄISCHE PATENTSCHRIFT

(11) **EP 2 009 180 B1**
(45) Veröffentlichungstag und Bekanntmachung des Hinweises auf die Patenterteilung: **04.04.2012**
(21) Anmeldenummer: 08010290.8
(22) Anmeldetag: 05.06.2008
(51) Int. Cl.: E02D 3/026

(54) **Abstreifvorrichtung für eine Bodenverdichtungswalze**
Cleaner teeth assembly for a soil compactor
Appareil de démoulage pour un rouleau compresseur

(30) Priorität: 26.06.2007 DE 202007008930 U
(43) Veröffentlichungstag der Anmeldung: 31.12.2008
(73) Patentinhaber: BOMAG GmbH, 56154 Boppard (DE)
(72) Erfinder: Grings, Werner, 56291 Laudert (DE)
(74) Vertreter: Lang, Friedrich

(56) Entgegenhaltungen:
- EP-A- 1 411 175
- EP-A- 1 520 935
- DE-U1- 9 214 279
- US-A- 4 858 699
- US-A- 5 360 288
- US-A1- 2004 114 999
- US-A1- 2005 194 154

## Beschreibung

Die Erfindung betrifft eine Abstreifvorrichtung für eine Bodenverdichtungswalze mit Stampffüßen, mit einem Holm, an welchem Abstreiferzähne angeordnet sind. Die Erfindung betrifft ferner eine Bodenverdichtungswalze mit einer derartigen Abstreifvorrichtung.

Bei Bodenverdichtungswalzen mit Stampffüßen tritt das Problem auf, dass auf der Bandage zwischen den Stampffüßen Bodenmaterial anhaftet und dadurch die Leistung der Bodenverdichtungswalze verschlechtert wird. Es ist bekannt, quer zur Walze einen Holm mit Abstreiferzähnen aus Flachstahl oder Stahlguss anzubringen, die in die Zwischenräume der Stampffüße ragen. Außerdem ist es bekannt, die Abstreiferzähne nachzustellen, um den durch Benutzung aufgetretenen Verschleiß auszugleichen. In der DE 10 2004 043 038 A1 der Anmelderin wird eine Abstreifvorrichtung beschrieben, in der die Abstreiferzähne auf einem Rundrohr befestigt sind. Durch Drehen des Rohrs wird ein Nachstellen der Abstreiferzähne erreicht. Diese Vorrichtung ermöglicht ein sehr einfaches Nachjustieren der Abstreiferzähne. Jedoch können nur alle Zähne gemeinsam verstellt werden. Im praktischen Betrieb kommt es aber häufig vor, dass die Abstreiferzähne entlang des Holms unterschiedlich beansprucht werden. Es bestand daher ein Bedarf an einer Abstreifvorrichtung, in der auf einfache Weise auf den individuellen Verschleiß der Abstreifzähne reagiert werden kann.

Weiter zeigt DE 92 142 79 U1 eine Abstreifvorrichtung entsprechend dem Oberbegriff Anspruch 1.

Der Erfindung liegt daher die ***Aufgabe*** zugrunde, eine Abstreifvorrichtung und eine Bodenverdichtungswalze der eingangs genannten Art anzugeben, welche diesem Bedarf gerecht wird.

Die Aufgabe wird mit der Abstreifvorrichtung nach Anspruch 1 sowie der Bodenverdichtungswalze nach Anspruch 10 gelöst. Bevorzugte Ausführungsformen der Abstreifvorrichtung sind in den Unteransprüchen beschrieben.

Die Erfindung betrifft in ihrem ersten Aspekt also eine Abstreifvorrichtung für eine Bodenverdichtungswalze mit Stampffüßen. Derartige Bodenverdichtungswalzen sind im Stand der Technik bekannt. Sie weisen auf dem Außenumfang einer drehbar gelagerten Walze, der sogenannten Bandage, eine Vielzahl üblicherweise in parallelen Reihen angeordneter Vorsprünge - Stampffüße genannt - auf. Beim Überfahren des zu verdichtenden Untergrundes haftet Bodenmaterial zwischen den Stampffüßen auf der Bandage an und muss entfernt werden, damit die Walze ihre volle Wirkung entfalten kann. Zu diesem Zweck verläuft üblicherweise parallel zur Achsrichtung der Walze ein Holm mit Abstreiferzähnen, die in Richtung auf die Bandage vorstehen und zwischen die Stampffüße greifen. Beim Drehen der Walze streifen die Abstreiferzähne das Bodenmaterial von der Bandage ab. Dabei verschleißen die Abstreiferzähne aber zunehmend. Bisher war es üblich, den gesamten Abstreifer mit sämtlichen Zähnen auszutauschen, wenn die Zähne zu stark abgenutzt waren und sich nicht mehr ausreichend nachstellen ließen, wenn eine solche Ausgleichsmöglichkeit vorgesehen war (vgl. z.B. in der vorstehend erwähnten DE 10 2004 043 038 A1 oder in DE 92 142 79 U1). Eine solche vollständige Auswechslung ist jedoch relativ aufwendig und teuer und zudem auf der Baustelle von nicht dafür ausgebildetem Personal kaum durchführbar.

Erfindungsgemäß ist daher vorgesehen, die Abstreiferzähne zu teilen und einen Halteteil vorzusehen, der am Holm befestigt ist, der die Abstreiferzähne trägt, sowie einen Verschleißteil, der lösbar am Halteteil befestigt ist. Diese Anordnung ermöglicht es, den Verschleißteil separat auszutauschen. Dies hat zum einen der Vorteil, dass nicht der gesamte Abstreiferzahn getauscht werden muss, sondern nur sein unmittelbar vom Verschleiß betroffener Endbereich. Auf diese Weise kann Material eingespart werden. Vorteilhaft ist dabei auch, dass der Halteteil, der drehfest am Holm gelagert sein muss, dort verbleiben kann. Beispielsweise kann der Halteteil fest mit dem Holm verschweißt sein. Eine aufwendige Justage des Abstreiferzahns - wie sonst nach jedem Einzelaustausch erforderlich - ist daher nicht nötig. Vielmehr kann der Verschleißteil ohne Aufwand in passender Position eingesetzt werden, da diese durch den Halteteil eindeutig vorgegeben werden kann.

Ein weiterer Vorteil besteht darin, dass nicht alle Abstreiferzähne insgesamt mit der Abstreifvorrichtung ausgetauscht werden müssen, sondern ein Austausch einzelner Verschleißteile in Abhängigkeit von ihrer Abnutzung erfolgen kann. Oft ist es nämlich so, dass die Abnutzung der Abstreiferzähne über die Länge des Abstreifers nicht gleichmäßig erfolgt, sondern beispielsweise in Nachbarschaft zur Mitte der Bandage stärker als zu den Rändern hin. Ein Austausch nur der mittleren Zähne bzw. der Verschleißteile spart somit Material und damit Kosten.

Zudem ist die Auswechslung der Verschleißteile sehr viel einfacher zu bewerkstelligen als der Austausch der gesamten Abstreifvorrichtung. Letztere muss üblicherweise durch ausgebildetes Wartungspersonal erfolgen. Dagegen können Halteteil und Verschleißteil der erfindungsgemäßen Abstreifvorrichtung auch so gestaltet werden, dass der Austausch des Verschleißteils vom nicht speziell geschultem Bediener der Bodenverdichtungswalze selbst vorgenommen werden kann. In einer bevorzugten Ausbildungsform der Erfindung sind Halteteil und Verschleißteil daher formschlüssig aneinander befestigt. Die Formschlussverbindung ist dabei zweckmäßig so ausgebildet, dass die beiden Teile nur in einer einzigen Orientierung zueinander verbunden werden können. Auf diese Weise werden Fehlanordnungen verhindert.

Bevorzugt werden Halteteil und Verschleißteil ineinander gesteckt. Dafür weist eines der beiden Teile einen Vorsprung auf, der in einer Ausnehmung oder Vertiefung des anderen Teils aufgenommen wird. Zur Befestigung der Teile aneinander geht zweckmäßig durch die ineinander gesteckten Bereiche beider Teile eine Durchgangsöffnung hindurch. Halteteil und Verschleißteil werden bevorzugt dadurch gegeneinander fixiert, dass in die Durchgangsöffnung ein Stift gesteckt wird. Zweckmäßig weist dieser Stift eine solche Form auf, dass er sich in der Durchgangsöffnung verklemmt und nicht unbeabsichtigt aus dieser heraus fällt. Beispielsweise kann der Stift an seinem einen Ende eine Verbreiterung aufweisen, um ein Durchrutschen durch die Durchgangsöffnung zu verhindern, und mit seinem anderen Ende über die Oberfläche des Abstreiferzahns vorstehen. Dies hat den Vorteil, dass der Stift zum Beispiel durch Dagegenschlagen mit einem Hammer aus der Durchgangsöffnung wieder herausgetrieben werden kann, wenn Halteteil und Verschleißteil voneinander gelöst werden sollen.

Grundsätzlich ist auch jede andere Art von Befestigung von Halteteil und Verschleißteil aneinander möglich. Genannt werden können die Befestigung von Halteteil und Verschleißteil mittels Rast- und/oder Schraubverbindung. Ein spezielles Beispiel einer Kombination von Dreh- und Rastverbindung ist eine Bajonettverbindung. Bevorzugt sind solche Arten von Verbindungen, die mit einfachstem oder gar keinem Handwerkszeug von ungeschultem Personal hergestellt und wieder gelöst werden können. Zudem muss die Verbindung geeignet sein, den Belastungen standzuhalten, die während des Betriebs der Abstreifvorrichtung auf die Abstreiferzähne wirken.

Ein weiterer Vorteil der Trennung des Abstreiferzahns in einen Halteteil und einen Verschleißteil besteht darin, dass auch das Material für beide Teile unterschiedlich gewählt werden kann. So ist es möglich, den Verschleißteil aus einem verschleißärmeren Material als den Halteteil zu fertigen. Es kann also haltbareres, härteres und üblicherweise teureres Material für den Verschleißteil gewählt werden als für den Halteteil. Zum Beispiel kann der Verschleißteil aus Stahl, insbesondere gehärtetem Stahl, bestehen oder eine Außenkappe aus diesem Material aufweisen, während der Kern aus einem weniger teuren Material gefertigt ist.

Der Abstreiferzahn insgesamt kann - abgesehen von seiner Teilung in einen Verschleißteil und einen Halteteil - was Form, Material und Art der Befestigung am Holm angeht, dem entsprechen, was bereits aus dem Stand der Technik bekannt ist. Gleiches gilt auch für die übrige Ausgestaltung der Abstreifvorrichtung und der gesamten Bodenverdichtungswalze, die ebenfalls Gegenstand dieser Erfindung ist. Beispielhaft wird auf die Offenbarung der DE 10 2004 043 038 A1 verwiesen. An welcher Stelle die Trennung des Abstreiferzahns in Verschleißteil und Halteteil erfolgt, hängt beispielsweise davon ab, bis zu welchem Bereich der Zahn mit dem zu verdichtenden Material in Berührung kommt. In diesem Bereich sollte der auswechselbare Verschleißteil vorhanden sein.

Nachfolgend wird die Erfindung anhand eines in den Zeichnungen dargestellten Ausführungsbeispiels weiter erläutert. Die Erfindung ist jedoch nicht auf dieses Beispiel beschränkt. In den Zeichnungen zeigen schematisch:
- Fig. 1: einen Querschnitt durch ein Ausführungsbeispiel einer erfindungsgemäßen Bodenverdichtungswalze mit Stampffüßen;
- Fig. 2: eine perspektivische Ansicht eines Beispiels einer erfindungsgemäßen Abstreifvorrichtung;
- Fig. 3: eine Seitenansicht auf einen an einem Holm befestigten Abstreiferzahn und
- Fig. 4 und 5: perspektivische Ansichten eines Abstreiferzahns in Explosionsansicht und in zusammengesetztem Zustand.

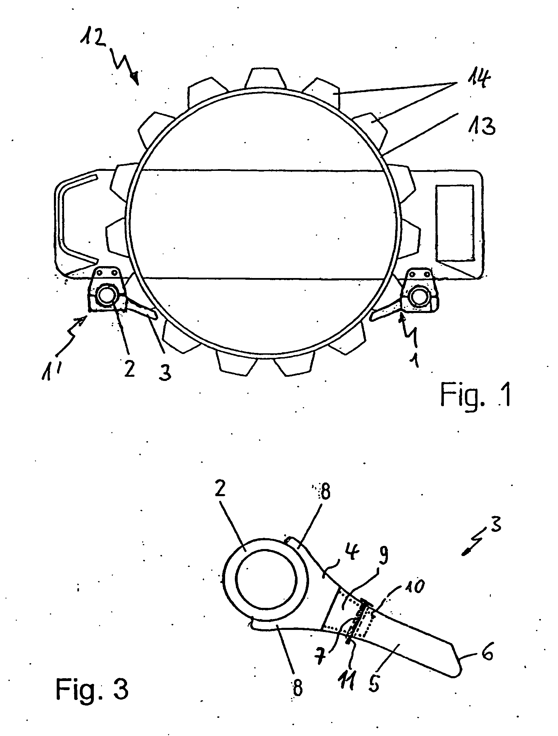

In Fig. 1 veranschaulicht eine quer zu ihrer Achse geschnittene Bodenverdichtungswalze 12 mit über die Bandage 13 verteilten Stampffüßen 14. Die Bodenverdichtungswalze 12 entspricht im Wesentlichen derjenigen, die in der DE 10 2004 043 038 A1 beschrieben ist.

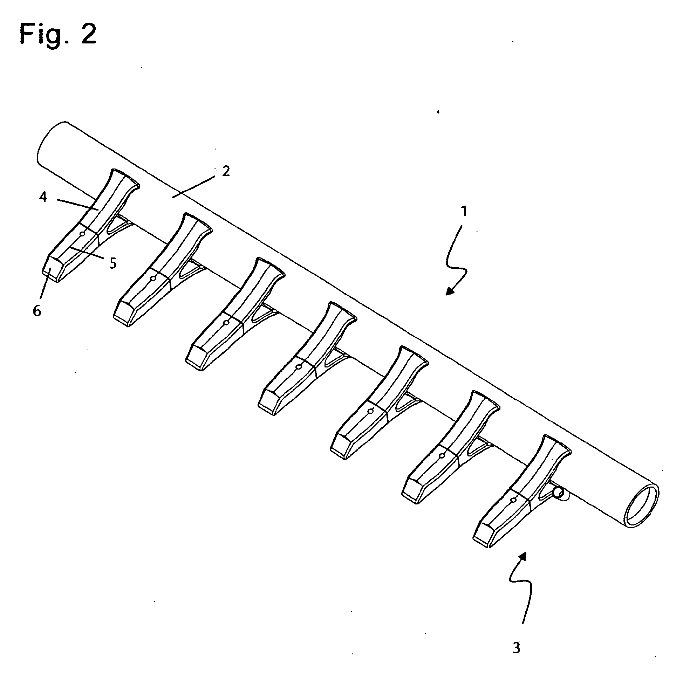

Zur Reinigung der Bandage 13 und der Zwischenräume sind zwischen den Stampffüßen 14 bei dem dargestellten Beispiel zwei Abstreifvorrichtungen 1, 1' vorhanden. Wie auch aus der vergrößerten Darstellungen gemäß Fig. 2 und 3 ersichtlich, weisen die Abstreifvorrichtungen 1, 1' jeweils einen als Rohr 2 mit kreisrundem Querschnitt ausgebildeten Holm auf, der als Träger für eine Reihe von Abstreiferzähnen 3 dient. Diese ragen radial in die Zwischenräume zwischen den Stampffüßen 14, wobei sie in dem in Fig. 1 dargestellten Zustand schräg nach unten gerichtet sind. Die Stirnfläche 6 im Endbereich des Zahns 3 ist jeweils angeschrägt.

Wie an der in Fig. 2 gezeigten Seitenansicht auf einen der Zähne 3 verdeutlicht wird, weist jeder Zahn 3 in seinem Auflagerbereich und Fußpunkt zwei Finger 8 auf, welche das Rohr 2 im Bereich eines Kreissegments von beispielsweise ca. 180 ° umgreifen. Die Finger 8 sind an , symmetrisch diametral um etwa 180 ° winkelversetzt liegenden Schweißnähten 10 am Rohr 2 angeschweißt. Die Befestigung des Rohrs 2 entspricht dem beschriebenen Stand der Technik.

Erfindungsgemäß sind die Abstreiferzähne 3 in einen Halteteil 4 und einen Verschleißteil 5 geteilt. Der Halteteil 4 ist über die mit diesem verbundenen Finger 8 am Rohr 2 befestigt. Mit dem Halteteil 4 lösbar verbunden ist das freie Ende des Zahns 3. Dieser Bereich wird als Verschleißteil 5 bezeichnet. Mit diesem Teil wird im Wesentlichen die Abstreifarbeit an der Bandage 13 vorgenommen. Im gezeigten Fall sind Halteteil 4 und Verschleißteil 5 mittels Steckverbindung aneinander befestigt. Hierzu weist der Halteteil 4 einen keilartigen Vorsprung 9 auf, der in eine passende Ausnehmung 10 im Verschleißteil 5 formschlüssig aufgenommen werden kann. Durch den Bereich, in dem Vorsprung 9 und Aufnahmebereich 10 des Verschleißteils 5 ineinandergreifen, ist eine Durchgangsbohrung 7 vorhanden. Zur Fixierung von Halteteil 4 und Verschleißteil 5 wird durch diese Öffnung 7 ein Klemmstift 11 gesteckt. Dies ist in Fig. 2 dargestellt. Der Klemmstift 11 weist einen verbreiterten Kopf (in der Figur oberhalb des Zahns 3) und einen Schaft auf, der so lang ist, dass er über die Unterseite des Zahns 3 vorsteht. Durch Herausschlagen des Klemmstifts 11 (zum Beispiel durch Schlagen mit einem Hammer gegen die Unterseite des Zahns 3) kann der Klemmstift aus der Durchgangsöffnung entfernt werden. Anschließend lassen sich Halteteil 4 und Verschleißteil 5 voneinander trennen. Der abgenutzte Verschleißteil 5 kann gegen einen neuen Verschleißteil ausgewechselt werden.

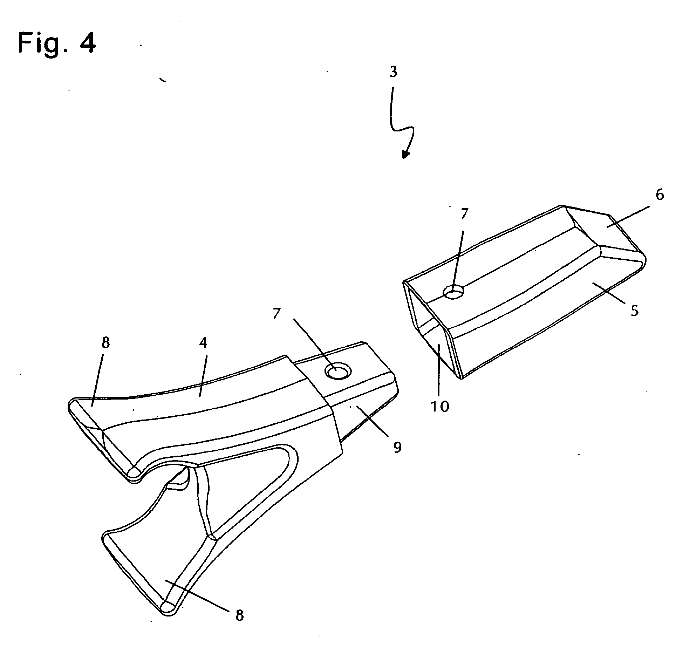

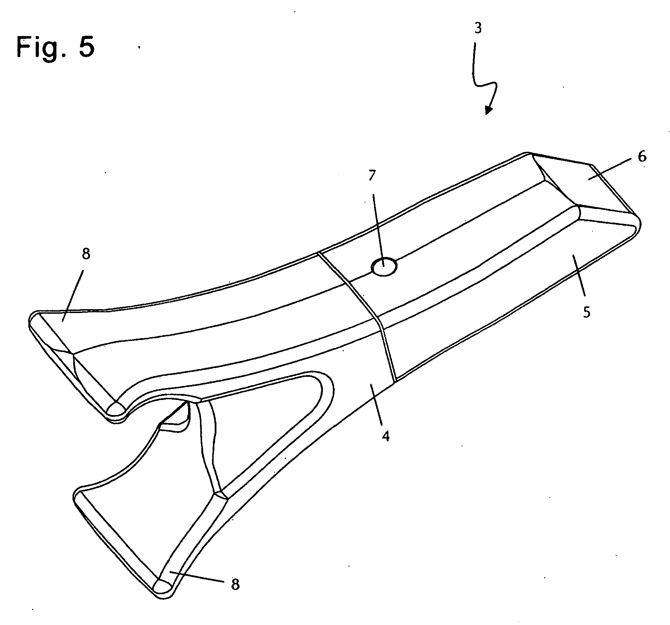

Fig. 4 und 5 zeigen vergrößerte Darstellungen des teilbaren Abstreiferzahns 3. Fig. 4 zeigt den Zahn mit voneinander getrenntem Halteteil 4 und Verschleißteil 5, Fig. 5 die zusammengefügten Teile, wobei aber der Klemmstift 11 noch nicht zur Sicherung der Teile aneinander in die Öffnung 7 eingeschoben ist. Beide Teile bestehen beispielsweise - wie im Stand der Technik üblich - aus Stahl, sind (bis auf die Ausnehmung 10 im Verschleißteil 5) massiv und zum Beispiel geschmiedet.

## Patentansprüche

1. Abstreifvorrichtung (1) für eine Bodenverdichtungswalze (12) mit Stampffüßen (14), umfassend einen Holm (2), an welchem mehrere Abstreifzähne (3) angeordnet sind, wobei die Abstreifzähne (3) einen am Holm (2) befestigten Halteteil (4) aufweisen, sowie einen Verschleißteil (5), der lösbar am Halteteil (4) befestigt ist,
**dadurch gekennzeichnet,**
**dass** der Halteteil (4) und der Verschleißteil (5) formschlüssig aneinander befestigt sind, derart, dass der Halteteil (4) und der Verschleißteil (5) formschlüssig ineinander gesteckt sind.

2. Abstreifvorrichtung (1) nach Anspruch 1,
**dadurch gekennzeichnet,**
**dass** der Halteteil (4) einen keilartigen Vorsprung (9) aufweist, der in einer passenden Ausnehmung (10) im Verschleißteil (5) formschlüssig aufgenommen werden kann.

3. Abstreifvorrichtung (1) nach Anspruch 1 oder 2,
**dadurch gekennzeichnet,**
**dass** durch die ineinander gesteckten Bereiche von Halteteil (4) und Verschleißteil (5) eine Durchgangsbohrung (7) hindurchgeht.

4. Abstreifvorrichtung nach Anspruch 2 und 3,
**dadurch gekennzeichnet,**
**dass** die Durchgangsbohrung (7) durch den keilartigen Vorsprung (9) des Halteteils (4) hindurchgeht und an dessen Oberfläche eine Fase aufweist.

5. Abstreifvorrichtung (1) nach Anspruch 3 oder 4,
**dadurch gekennzeichnet,**
**dass** in die Durchgangsbohrung (7) ein Stift (11) gesteckt ist.

6. Abstreifvorrichtung (1) nach Anspruch 5,
**dadurch gekennzeichnet,**
**dass** der Stift (11) an seinem einen Ende eine Verbreiterung aufweist, um ein Durchrutschen durch die Durchgangsbohrung (7) zu verhindern, und mit seinem anderen Ende über die Oberfläche des Abstreifzahns (3) hervorsteht.

7. Abstreifvorrichtung (1) nach einem der vorhergehenden Ansprüche,
**dadurch gekennzeichnet,**
**dass** der Verschleißteil (5) aus einem verschleißärmeren Material als der Halteteil (4) gefertigt ist.

8. Abstreifvorrichtung (1) nach einem der vorhergehenden Ansprüche,
**dadurch gekennzeichnet,**
**dass** der Verschleißteil (5) aus Stahl, insbesondere gehärtetem Stahl, besteht oder eine Außenkappe aus diesem Material aufweist.

9. Bodenverdichtungswalze (12) mit Stampffüßen (14),
**dadurch gekennzeichnet,**
**dass** diese eine Abstreifvorrichtung (1) nach einem der vorhergehenden Ansprüche umfasst.

## Claims

1. A stripping apparatus (1) for a soil compaction roller (12) with rammer butts (14), comprising a brace (2) on which several stripper teeth (3) are arranged, with the stripper teeth (3) having a holding part (4) fixed to the brace (2) and a wearing part (5) which is detachably fastened to the holding part (4),
**characterized in that**
the holding part (4) and the wearing part (5) are fastened to each other in an interlocking manner, such that the holding part (4) and the wearing part (5) are placed into each other in an interlocking manner.

2. A stripping apparatus (1) according to claim 1,
**characterized in that**
the holding part (4) comprises a wedge-like projection (9) which can be received in an interlocking manner in a fitting recess (10) in the wearing part (5).

3. A stripping apparatus (1) according to claim 1 or 2,
**characterized in that**
a through-hole (7) passes through the mutually inserted areas of holding part (4) and wearing part (5).

4. A stripping apparatus according to claim 2 and 3,
**characterized in that**
the through-hole (7) passes through the wedge-like projection (9) of the holding part (4) and comprises a beveled portion on its surface.

5. A stripping apparatus (1) according to claim 3 or 4,
**characterized in that**
a pin (11) is placed into the through-hole (7).

6. A stripping apparatus (1) according to claim 5,
**characterized in that**
the pin (11) has a widened portion at its one end in order to prevent slipping through the through-hole (7), and protrudes with its other end beyond the surface of the stripper tooth (3).

7. A stripping apparatus (1) according to one of the preceding claims,
**characterized in that**
the wearing part (5) is made from a material with lower wear and tear than the holding part (4).

8. A stripping apparatus (1) according to one of the preceding claims,
**characterized in that**
the wearing part (5) consists of steel, especially hardened steel, or comprises an external cap of said material.

9. A soil compaction roller (12) with rammer butts (14),
**characterized in that**
it comprises a stripping apparatus (1) according to one of the preceding claims.

## Revendications

1. Dispositif racleur (1) pour un rouleau compacteur (12) à pieds de mouton (14), comprenant un longeron (2) sur lequel plusieurs dents racleuses (3) sont disposées, lesquelles dents racleuses (3) présentent une partie de maintien (4) fixée sur le longeron (2) ainsi qu'une pièce d'usure (5) qui est fixée de façon amovible sur la partie de maintien (4),
**caractérisé en ce**
**que** la partie de maintien (4) et la pièce d'usure (5) sont fixées l'une à l'autre en engagement positif, de telle façon que la partie de maintien (4) et la pièce d'usure (5) sont emboîtées l'une dans l'autre en engagement positif.

2. Dispositif racleur (1) selon la revendication 1,
**caractérisé en ce**
**que** la partie de maintien (4) présente une saillie en forme de coin (9) qui peut être logée en engagement positif dans un creux (10) correspondant dans la pièce d'usure (5).

3. Dispositif racleur (1) selon la revendication 1 ou 2,
**caractérisé en ce**
**que** les parties emboîtées l'une dans l'autre de la partie de maintien (4) et de la pièce d'usure (5) sont traversées par un trou traversant (7).

4. Dispositif racleur selon les revendications 2 et 3,
**caractérisé en ce**
**que** le trou traversant (7) traverse la saillie en forme de coin (9) de la partie de maintien (4) et présente un chanfrein sur la surface de celle-ci.

5. Dispositif racleur (1) selon la revendication 3 ou 4,
**caractérisé en ce**
**qu'**une goupille (11) est insérée dans le trou traversant (7).

6. Dispositif racleur (1) selon la revendication 5,
**caractérisé en ce**
**que** la goupille (11) présente à son extrémité un évasement destiné à l'empêcher de glisser à travers le trou traversant (7) et dépasse par son autre extrémité de la surface de la dent racleuse (3).

7. Dispositif racleur (1) selon l'une des revendications précédentes,
**caractérisé en ce**
**que** la pièce d'usure (5) est faite d'un matériau plus résistant à l'usure que la partie de maintien (4).

8. Dispositif racleur (1) selon l'une des revendications précédentes,
**caractérisé en ce**
**que** la pièce d'usure (5) est faite d'acier, en particulier d'acier trempé ou possède un capuchon externe fait de ce matériau.

9. Rouleau compacteur (12) à pieds de mouton (14),
**caractérisé en ce**
**qu'**il possède un dispositif racleur (1) selon l'une des revendications précédentes.
